# FASCICULE DE BREVET EUROPEEN

(11) **EP 1 208 633 B1**
(45) Date de publication et mention de la délivrance du brevet: **22.03.2006**
(21) Numéro de dépôt: 00954586.4
(22) Date de dépôt: 03.08.2000
(51) Int. Cl.: H02K 51/00, B60K 6/04

(54) **TRANSMISSION ELECTROMAGNETIQUE A VARIATION CONTINUE**
STUFENLOS ELEKTROMAGNETISCHES GETRIEB
CONTINUOUSLY VARIABLE ELECTROMAGNETIC TRANSMISSION

(30) Priorité: 11.08.1999 EP 99115822
(43) Date de publication de la demande: 29.05.2002
(73) Titulaire: The Swatch Group Management Services AG, 2501 Biel (CH)
(72) Inventeur: LISOWSKI, Leszek, CH-2000 Neuchâtel (CH)
(74) Mandataire: Laurent, Jean
(86) Numéro de dépôt international: PCT/EP2000/007535
(87) Numéro de publication internationale: WO 2001/013500

(56) Documents cités:
- EP-A- 0 771 687
- EP-A- 0 798 844
- WO-A-99/39426

## Description

La présente invention concerne une transmission électromagnétique à variation continue, comportant une machine dynamoélectrique de type sans collecteur et à flux axial pourvue d'un arbre d'entrée et d'un arbre de sortie, et des moyens de commande et d'alimentation électrique à fréquence variable de ladite machine, la machine dynamoélectrique comportant un premier rotor lié à l'arbre d'entrée, un second rotor lié à l'arbre de sortie et un ensemble statorique, les deux rotors et l'ensemble statorique étant formés par des éléments discoïdes, l'ensemble statorique et au moins l'un des rotors ayant des éléments actifs respectifs pourvus d'enroulements raccordés aux moyens de commande et d'alimentation et agencés pour interagir avec l'autre rotor au moyen de flux magnétiques à travers des entrefers comprenant des entrefers axiaux entre des éléments discoïdes respectifs des rotors et de l'ensemble statorique.

Des transmissions électromagnétiques à variations continue comportant deux rotors qui coopèrent donc avec un stator commun ont déjà été proposés avant 1920 sous la forme de machines à collecteurs, en particulier des machines à courant continu. Voir par exemple les brevets US 1 392 349 et 1 515 322, qui décrivent des machines à flux axial, et le brevet US 1 493 853 qui décrit une machine à flux radial ayant deux rotors concentriques à l'intérieur d'un stator unique. Toutefois, ces machines à collecteur ont une construction compliquée et nécessitent beaucoup d'entretien, de sorte qu'elles n'ont pas rencontré de succès commercial.

Depuis quelles années, il existe un regain d'intérêt pour des transmissions électromagnétiques de ce genre, parce que les progrès de l'électronique de puissance permettent de les alimenter à une fréquence variable, déterminée en fonction des vitesses respectives des arbres et en fonction des flux de puissance désirés, et de les réaliser sous la forme de machines sans collecteur, par exemple de machines synchrones à aimants permanents.

Les demandes de brevet GB 2 278 242, EP 0 725 474, EP 0 771 687, EP 0 828 340 et EP 0 866 544 décrivent différentes configurations de transmissions à variation continue de ce genre, du type à champ radial, c'est-à-dire que les rotors et les stators ont une forme générale cylindrique. Les deux rotors et le stator peuvent alors être concentriques, de sorte que le champ magnétique passe radialement à travers les deux entrefers cylindriques séparant ces trois éléments. Cette configuration rend la machine dynamoélectrique assez compacte, mais elle crée des difficultés concemant le maintien d'une position précise des trois éléments l'un par rapport à l'autre, le raccordement électrique polyphasé du rotor intérieur, et surtout le refroidissement des deux rotors.

Les demandes de brevet EP 0 798 844 et WO 99/39426 décrivent des transmissions à variation continue du genre indiqué en préambule, du type à champ axial, c'est-à-dire que les éléments des rotors et de l'ensemble statorique ont une forme générale discoïde. L'utilisation d'éléments discoïdes offre en particulier un accès aisé au niveau de chaque arbre à partir du stator, ce qui permet de réaliser aisément les raccordements électriques d'alimentation sur des bagues tournantes fixées à l'arbre, ainsi que d'assurer la distribution d'un fluide de refroidissement jusqu'au coeur de la machine. De plus, la forme discoïde des éléments permet une grande liberté de dimensions et d'agencement des éléments, par exemple en groupant plusieurs éléments modulaires sur un même arbre pour augmenter la puissance de la machine ou en utilisant des éléments de différents diamètres ou de différents types dans la même machine.

La présente invention vise à perfectionner une transmission électromagnétique à flux axial et éléments discoïdes de manière à améliorer ses conditions de fonctionnement et élargir ainsi ses possibilités d'utilisation.

A cet effet, l'invention concerne une transmission électromagnétique du genre indiqué en préambule, caractérisée en ce qu'elle comporte des moyens de déplacement pour déplacer axialement au moins un des éléments discoïdes pour modifier la largeur de l'entrefer axial entre cet élément et un élément discoïde adjacent.

La possibilité de faire varier la largeur d'un entrefer, par un déplacement axial d'un élément discoïde, permet de réaliser une régulation du champ magnétique en fonction des conditions de fonctionnement désirées, ce qui élargit la plage des vitesses et permet d'optimiser le fonctionnement de la machine. Ceci est pratiquement impossible avec des rotors de formes cylindriques. D'autre part, la forme discoïde des éléments des rotors permet de réaliser, par déplacement axial d'un ou plusieurs éléments un accouplement mécanique direct entre les rotors afin d'établir sur commande une prise directe entre les arbres d'entrée et de sortie, sans devoir ajouter l'embrayage séparé prévu dans le document EP 0 866 544 dans le cas d'une machine à configuration cylindrique. Cet accouplement peut utiliser avantageusement les moyens de déplacement destinés à modifier la largeur d'un entrefer.

Les caractéristiques et avantages de la présente invention apparaîtront dans la description suivante de différentes formes de réalisation préférées, présentées uniquement à titre d'exemples non limitatifs en référence aux dessins annexés, dans lesquels :
- la figure 1 représente schématiquement un ensemble de traction hybride pour un véhicule automobile, comportant une transmission électromagnétique à variation continue selon l'invention,
- la figure 2 représente, en perspective partiellement coupée, différents types d'éléments discoïdes pouvant être utilisés dans une transmission électromagnétique selon l'invention,
- les figures 3 à 7 représentent schématiquement en coupe axiale différentes combinaisons possibles, parmi bien d'autres, d'éléments discoïdes dans une transmission électromagnétique selon l'invention,
- la figure 8 représente schématiquement en coupe axiale une forme de réalisation particulière d'une partie de la machine dynamoélectrique, comportant des moyens de déplacement pour modifier deux entrefers entre des éléments des deux rotors,
- la figure 9 représente schématiquement en coupe axiale une autre forme de réalisation particulière d'une partie de la machine dynamoélectrique, comportant des moyens d'accouplement pour lier en rotation le premier rotor au second rotor,
- les figures 10 et 11 représentent deux variantes des moyens de déplacement avec des éléments rotoriques analogues à ceux de la figure 8, et
- la figure 12 montre une came du mécanisme représenté en figure 11.

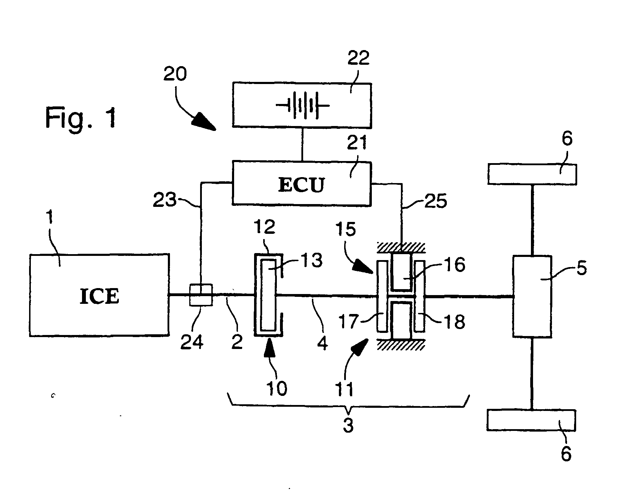

Dans le système de traction hybride représenté à la figure 1, un moteur thermique 1, par exemple un moteur à combustion interne (ICE), entraîne directement l'arbre d'entrée 2 d'une transmission électromagnétique à variation continue 3, dont l'arbre de sortie 4 entraîne, via un différentiel 5, les roues 6 d'un ou plusieurs essieux moteurs du véhicule. Pour la compréhension du fonctionnement de la machine dynamoélectrique 3, on peut considérer qu'elle comprend deux parties 10 et 11 pouvant constituer chacune une machine électrique sans collecteur qui peut fonctionner en moteur ou en générateur. La première partie 10 comporte un premier rotor 12, lié à l'arbre d'entrée 2, et un élément de rotor 13 lié à l'arbre de sortie 4 et faisant partie d'un second rotor 15 qui est commun aux deux parties 10 et 11 de la partie 3.

La seconde partie 11 de la machine 3 comporte un stator 16 qui coopère, dans le cas présent, avec deux éléments rotoriques 17 et 18 liés à l'arbre de sortie 4. Tous les éléments rotoriques et statoriques 12, 13, 16, 17 et 18 sont des éléments discoïdes, présentant entre eux des entrefers qui s'étendent dans des plans radiaux et dans lesquels le flux magnétique a une direction axiale. Toutefois, il n'est pas exclu que le flux ait une direction radiale dans certaines parties de la machine, par exemple dans l'entrefer circonférentiel entre les éléments 12 et 13, comme on l'expliquera plus loin.

Dans la figure 1, on a dessiné en traits gras les éléments discoïdes qui sont actifs, c'est-à-dire ayant des enroulements raccordés à des moyens de commande et d'alimentation 20, tandis que les éléments réactifs tels que 13, 17 et 18 sont représentés en traits fins. Les moyens de commande et d'alimentation sont représentés très schématiquement dans le dessin sous la forme d'une unité électronique de commande (ECU) 21 reliée à une batterie d'accumulateurs 22. Ces moyens ne seront pas décrits en détail ici, car ils peuvent être réalisés de manière connue. Le lecteur pourra se référer à ce sujet en particulier aux demandes de brevets européens citées plus haut. On mentionnera simplement que l'unité 21 contient de préférence deux convertisseurs AC/DC polyphasés reliés l'un à l'autre et à la batterie 22 par un réseau à courant continu, l'un de ces convertisseurs étant raccordé au premier rotor 12 par une liaison polyphasée 23 et un dispositif de bagues de contact 24 placées sur ce rotor ou sur l'arbre d'entrée 2, tandis que le second convertisseur est raccordé au stator 16 par une liaison polyphasée 25.

Sachant que les deux éléments actifs (le premier rotor 12 et le stator 16 dans l'exemple de la figure 1) peuvent fonctionner dans deux états, à savoir un état moteur et un état générateur, et qu'ils sont associés à deux convertisseurs à fréquences et amplitudes réglables et une batterie, il est possible de commander de manière appropriée l'alimentation des éléments actifs au moyen des convertisseurs afin d'obtenir les différences de vitesses voulues entre les rotors et le stator, et de réaliser facilement et d'optimiser l'échange d'énergie entre les arbres d'entrée et de sortie dans les deux sens. Cette constatation justifie la dénomination "à variation continue" de la transmission selon l'invention.

La première partie 10 de la machine est capable de faire tourner l'arbre de sortie 4 dans le sens opposé à la rotation de l'arbre d'entrée 2 pour entraîner le véhicule en marche arrière, grâce à une séquence appropriée des phases de l'alimentation électrique. Elle peut en outre servir de démarreur pour lancer le moteur 1 et d'embrayage électromagnétique lors du démarrage du véhicule, tandis que la seconde partie 11 peut servir à une propulsion purement électrique si le moteur 1 est arrêté.

Le nombre des phases est supérieur ou égal à deux et il est de préférence égal à trois.

On notera que chacune des deux parties de machine 10 et 11 peut être, au choix, de type asynchrone ou de type synchrone à aimants permanents. Chacune d'elles peut comporter un nombre quelconque d'éléments discoïdes, en fonction des dimensions disponibles du point de vue du diamètre et de la longueur axiale de la machine 3.

D'autre part, il importe de noter que les deux parties 10 et 11 de la machine 3 peuvent en réalité être groupées étroitement de façon que le flux magnétique les traverse axialement d'un bout à l'autre de la machine.

On notera aussi que la liaison polyphasée 23 pourrait se faire sur l'arbre de sortie 4 au lieu de l'arbre d'entrée 2, si c'est l'élément 13 qui est actif au lieu du premier rotor 12.

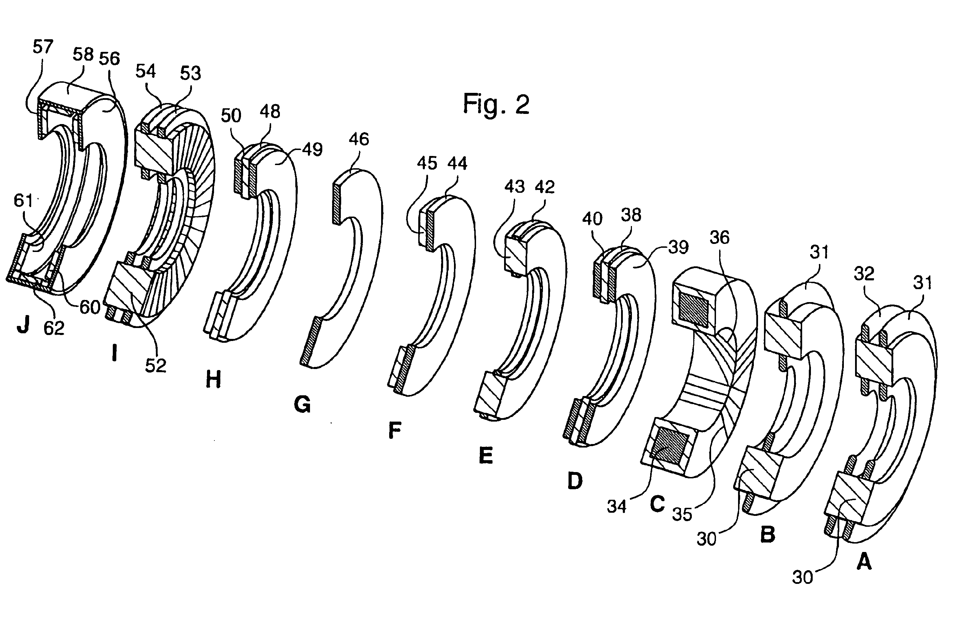

La figure 2 représente différents types A à J d'éléments discoïdes utilisables pour former les rotors 12 et 15 et le stator 16 définis plus haut. Chaque rotor ou stator peut comporter un ou plusieurs de ces éléments, de même type ou de type différent selon les cas. Les éléments des types A, B et C sont des éléments actifs, tandis que ceux des types D à J sont des éléments réactifs.

L'élément de type A comporte un noyau annulaire ferromagnétique 30 portant deux bobinages polyphasés 31 et 32 s'étendant chacun dans un plan radial, c'est-à-dire perpendiculaire à l'axe de rotation de la machine. Les enroulements des bobinages 31 et 32 sont formés de spires dont les tronçons de conducteurs actifs passent dans des encoches radiales, fermées ou non latéralement, du noyau 30.

L'élément du type B est semblable à celui du type A, mais ne comporte qu'un seul bobinage 31.

L'élément de type C a un noyau 34 qui peut être ferromagnétique ou non. Sur ce noyau peuvent être placées deux formes de bobinage, au choix : un bobinage 35 dont les spires s'étendent dans des plans axiaux ou un bobinage 36 ayant des spires inclinées dont les deux côtés radiaux sont décalés d'un pas polaire du bobinage.

Les éléments des types D, E et F sont des éléments à aimants permanents, donc du type synchrone. Leur noyau peut être ferromagnétique ou non.

L'élément de type D possède un noyau 38 sur les deux faces duquel sont fixées des rangées circulaires d'aimants permanents 39 et 40. Par contre, dans l'élément de type E, le noyau 42 est traversé par les aimants permanents 43. Dans le cas du type F, le noyau 44 porte des aimants permanents 45 sur une seule de ses faces. Un tel élément est utilisé avec un noyau ferromagnétique s'il doit fermer les lignes de champ en bout de ligne. Si au contraire son noyau n'est pas ferromagnétique, il sera simplement traversé axialement par le flux magnétique.

L'élément de type G est constitué d'un simple disque ferromagnétique 46 servant à fermer les lignes de champ en direction circonférentielle ou à faire passer axialement le flux magnétique entre deux autres éléments discoïdes.

Les éléments des types H et I sont de type asynchrone. Dans le type H, un noyau ferromagnétique 48 porte sur chacune de ses faces une couche conductrice 49, 50, par exemple en aluminium ou en cuivre, pour former un induit. Un élément du même genre (non représenté) peut n'avoir une couche conductrice que sur une seule de ses faces.

L'élément de type I a un noyau ferromagnétique 52 portant un bobinage en court-circuit du type à cage, ou plus exactement deux de ces bobinages 53 et 54 dans le cas présent. Chaque bobinage 53, 54 est disposé dans un plan radial et traverse le noyau 52 dans des encoches radiales qui peuvent être ouvertes ou fermées. L'élément de type 1 sera de préférence à une seule cage lorsqu'il s'agit d'un élément terminal, pour fermer les lignes de champ, et de préférence à double cage si le flux magnétique doit le traverser axialement.

L'élément de type J est un élément discoïde à profil en C, c'est-à-dire que son noyau comprend deux disques annulaires 56 et 57 reliés par une pièce tubulaire 58. On notera que le profil en C peut être ouvert vers l'intérieur, comme le montre la figure 2, ou vers l'extérieur pour encadrer un disque annulaire de plus grand diamètre. Chacune des trois parties 56 à 58 du noyau est recouverte, du côté de l'intérieur du profil en C, d'aimants permanents 60, 61 et 62 pour constituer un élément de type synchrone. Toutefois, cet élément pourrait être conçu sous la forme asynchrone, en remplaçant les aimants 60 à 62 par des couches conductrices analogues aux couches 49 et 50 de l'élément de type H.

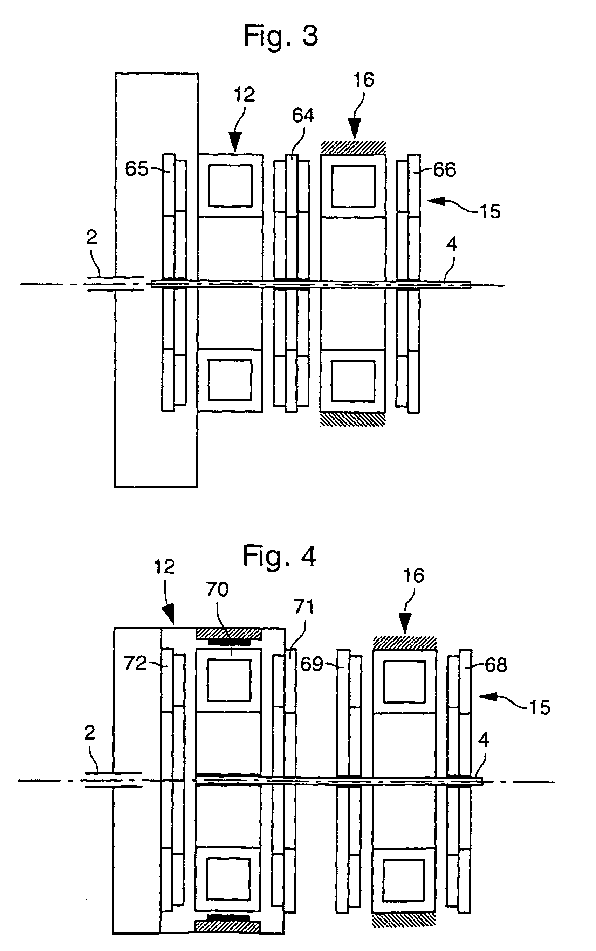

Les figures 3 à 7 montrent divers exemples de possibilités de combiner certains des éléments discoïdes représentés à la figure 2 dans la machine dynamoélectrique 3 représentée à la figure 1.

Selon la figure 3, le premier rotor 12 lié à l'arbre d'entrée 2 comporte un élément actif de type A ou C. Le stator 16 comporte aussi un élément actif de type A ou C. Le rotor 15 lié à l'arbre de sortie 4 est formé d'éléments réactifs comprenant un élément central 64 traversé par le flux entre le stator 16 et le premier rotor 12, et deux éléments terminaux 65 et 66 pourvus d'un noyau ferromagnétique pour fermer les lignes de champ. Dans une version asynchrone, l'élément 64 peut être du type I, et les éléments 65 et 66 du type H monoface. Dans une version synchrone, l'élément 64 peut être de type D ou E, et les éléments 65 et 66 du type F à noyau ferromagnétique.

Selon la figure 4, le stator 16 est encore formé par un élément actif de type A ou C encadré par deux éléments réactifs 68 et 69 faisant partie du second rotor 15 et ayant des noyaux magnétiques pour fermer les lignes de champ. Ces éléments peuvent être du type H monoface dans le cas asynchrone ou du type F dans le cas synchrone. L'autre élément actif est un élément 70 de type A ou C appartenant au second rotor 15 et encadré par deux éléments 71 et 72 du premier rotor 12. Ces derniers peuvent être de l'un des types mentionnés ci-dessus pour les éléments 68 et 69.

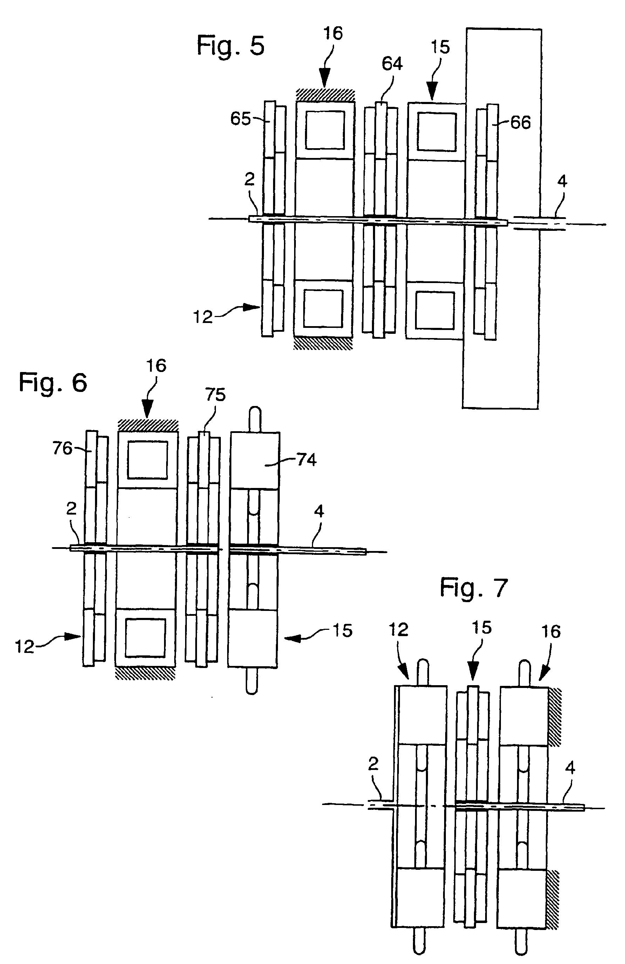

L'agencement selon la figure 5 est semblable à celui de la figure 3, sauf que les rôles des deux arbres 2 et 4 et des deux rotors 12 et 15 sont inversés. Les éléments discoïdes peuvent donc être les mêmes que dans la figure 3.

Selon la figure 6, le stator 16 est toujours constitué comme dans les exemples précédents, tandis que l'autre élément actif 74 fait partie du second rotor 15 et peut être du type B. Le premier rotor 12 comporte un élément central 75, traversé par le flux entre le stator et l'élément 74, et un élément terminal 76. Ces éléments 75 et 76 peuvent être des mêmes types que les éléments 64 et 65 représentés à la figure 3.

Enfin, dans l'exemple de la figure 7, le stator 16 et le premier rotor 12 sont formés chacun par un élément actif terminal du type B, et le second rotor placé entre eux est formé d'un élément réactif traversé axialement par le flux, notamment de type E ou I, ou doté d'un noyau ferromagnétique pour fermer les lignes de champ, notamment de type D ou H.

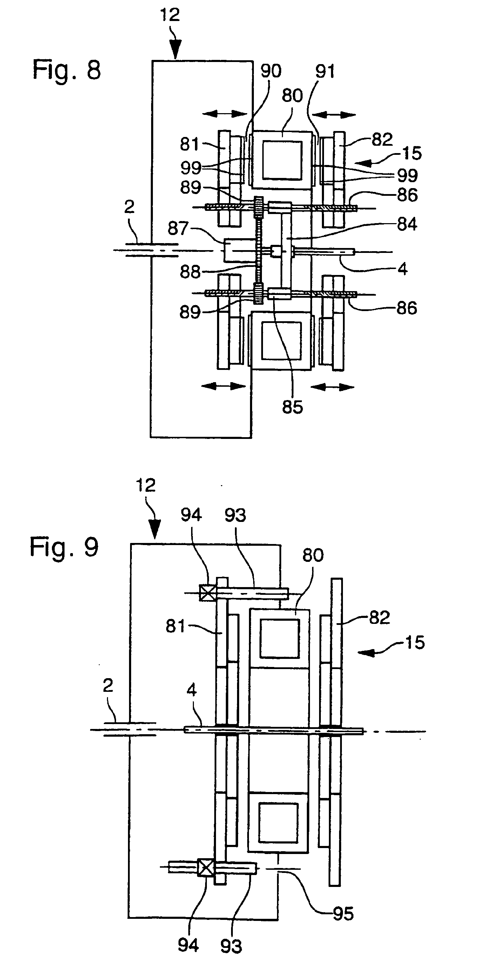

Dans la forme de réalisation particulière illustrée par la figure 8, le premier rotor 12 comporte un élément discoïde actif 80 fixé à l'arbre d'entrée 2 et encadré de manière symétrique par deux éléments discoïdes réactifs 81 et 82 du second rotor 15, éléments qu'on peut déplacer axialement comme l'indiquent les flèches. L'arbre de sortie 4 est muni d'un support central 84 comportant des paliers 85 dans lesquels deux ou plusieurs vis axiales 86 sont montées de manière librement rotative. Les vis 86 ont, de part et d'autre de leur palier 85, des filetages de sens opposés qui sont engagés dans des trous filetés des deux éléments 81 et 82 pour supporter ceux-ci et déterminer leur écartement qui peut varier symétriquement par une rotation synchronisée des vis. Dans ce but, l'arbre 4 est muni d'un petit moteur électrique 87 entraînant une roue dentée centrale 88 qui attaque des pignons 89 fixés aux vis 86.

Spécialement quand les éléments discoïdes réactifs 81 et 82 sont du type à aimants permanents, leur disposition symétrique par rapport à l'élément 80 a l'avantage d'équilibrer les grandes forces axiales dues à ces aimants. Ces forces sont absorbées simplement dans les vis 86.

Grâce à ce mécanisme qui peut être commandé par une unité électronique de gestion de la transmission telle que l'unité 21 représentée à la figure 1, il est possible de créer avantageusement une régulation du champ magnétique par la variation de largeur des entrefers symétriques 90 et 91 entre l'élément 80 et les éléments réactifs 81 et 82. Il est alors avantageux de maintenir une faible largeur d'entrefer aux basses vitesses et d'obtenir ainsi des valeurs élevées du champ et de la tension induite, donc une valeur réduite du courant pour un couple donné, que la machine fonctionne en mode moteur ou en mode générateur. Aux vitesses plus élevées, la régulation intervient en augmentant la largeur d'entrefer, progressivement ou par paliers, pour affaiblir le champ et la tension induite afin de maintenir une différence suffisante entre celle-ci et la tension d'alimentation des enroulements. Cette régulation agit aussi de manière connue sur l'alimentation par les convertisseurs dans l'unité de commande 21 représentée en figure 1. En maîtrisant ainsi la différence entre la tension d'alimentation et la tension induite, il devient possible d'optimiser l'efficacité de l'ensemble constitué par la transmission 3 et les convertisseurs de l'unité de commande 21.

Une telle régulation a aussi l'avantage de permettre d'ajuster le fonctionnement de la machine à l'état de la batterie 22, dont la tension continue peut varier notablement. Par exemple lorsque la tension de batterie et donc la tension d'alimentation de la machine est basse, l'affaiblissement du champ aux vitesses élevées permet d'éviter que la tension induite atteigne ou dépasse la tension d'alimentation, de sorte que la machine peut quand même fonctionner sur toute la gamme des vitesses pour lesquelles elle est prévue.

Comme l'exemple décrit ici concerne l'interaction entre des éléments des deux rotors, il s'applique à la première partie de machine 10 représentée à la figure 1, mais un mécanisme du même genre peut aussi être prévu dans la seconde partie de machine 11, en l'occurrence dans le stator ou dans le second rotor.

En outre, le même mécanisme permet d'accoupler mécaniquement (par friction ou de manière positive) les deux rotors par serrage de l'élément 80 entre les éléments 81 et 82, pour transmettre en prise directe le couple de l'arbre d'entrée 2 à l'arbre de sortie 4 ou vice versa. Au préalable, l'alimentation électrique de l'élément actif 80 aura été mise à une fréquence nulle afin de synchroniser les vitesses des deux rotors. Cette synchronisation peut s'effectuer pendant que la transmission fonctionne en charge. Dans l'exemple représenté à la figure 8, l'accouplement s'effectue par friction et, à cet effet, les faces mutuellement opposées des éléments discoïdes 80, 81 et 82 comportent de préférence des garnitures de friction 99 dans les entrefers 90 et 91.

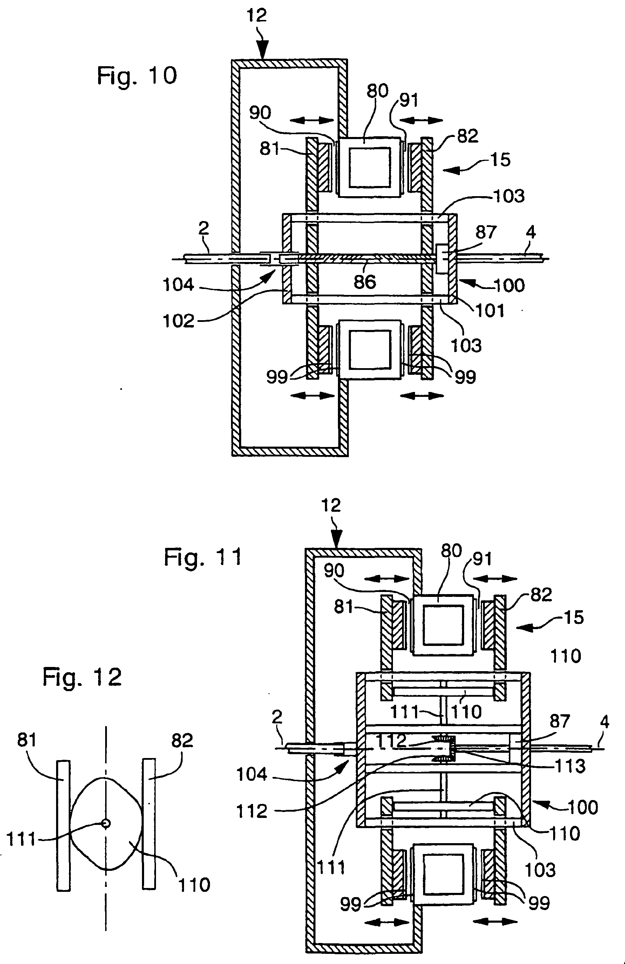

Un autre moyen de couplage direct entre les deux rotors 12 et 15, par un accouplement positif, est représenté schématiquement à la figure 9. Dans cet exemple, l'élément discoïde 81 du second rotor 15 porte plusieurs tiges 93 susceptibles de coulisser axialement dans cet élément sous l'action d'électro-aimants respectifs 94 pour s'engager dans des trous 95 du premier rotor 12 à la manière de crabots. Pour simplifier le dessin, la tige supérieure est représentée engagée tandis que l'autre ne l'est pas, mais bien entendu elles occupent en réalité la même position en même temps. Là aussi, l'alimentation électrique de l'élément actif 80 aura d'abord été mise à une fréquence nulle afin de synchroniser les vitesses des deux rotors avant l'accouplement. Un tel accouplement positif peut être incorporé à la structure selon la figure 8 si l'on désire éviter un accouplement par friction.

La figure 10 montre une variante des moyens de déplacement représentés à la figure 8, dont les vis axiales 86 décentrées sont remplacées par une seule vis axiale similaire 86 alignée avec l'arbre de sortie 4 et entraînée en rotation directement par le moteur électrique de commande 87. Les éléments discoïdes mobiles 81 et 82 ne sont pas supportés transversalement par la vis, mais par un support central 100 en forme de cadre fixé à l'arbre 4, ce support ayant deux flasques 101 et 102 et plusieurs barres longitudinales 103 qui traversent et supportent de manière coulissante les éléments 81 et 82. Le flasque 101 est fixé à l'arbre 4 et porte le moteur 87 dont l'arbre est lié à la vis 86. L'autre flasque 102 supporte l'autre extrémité de la vis 86 et peut avantageusement prendre appui sur l'arbre d'entrée 2 par un palier 104. Ce mécanisme fonctionne comme celui de la figure 8.

Dans la variante des figures 11 et 12, le mécanisme à vis de la figure 10 est remplacé par un mécanisme à cames 110 monté sur le support central 100. Plusieurs cames identiques 110, de préférence au moins trois pour des raisons de stabilité des éléments discoïdes, sont intercalées entre les éléments discoïdes mobiles 81 et 82 qui sont maintenus pressés contre les cames par les grandes forces d'attraction F de leurs aimants permanents, de sorte que les cames déterminent leur écartement. Chaque came 110 est fixée à un arbre radial individuel 111 pourvu d'un pignon conique 112. La position et la rotation synchronisée des cames sont commandées par le moteur électrique 87 qui attaque ensemble tous les pignons 112 au moyen d'un pignon conique central 113. Ce mécanisme fonctionne comme celui de la figure 8. Les forces d'attraction magnétique F sont si élevées qu'elles permettent un accouplement par friction sans risque de glissement entre l'élément 80 et les éléments 81 et 82.

En référence à la figure 1, on notera encore que la première partie de machine 10 peut servir de démarreur électrique pour le moteur 1 lorsque l'arbre de sortie 4 est bloqué. Ce blocage peut être effectué soit par les roues 6, soit par un frein de stationnement sur l'arbre 4 ou sur le différentiel 5, soit par en bloquant la seconde partie de machine 11 par alimentation à une fréquence nulle ou de manière mécanique avec l'un des moyens de déplacement représentés aux figures 8 à 11.

## Revendications

1. Transmission électromagnétique à variation continue, comportant une machine dynamoélectrique (3) de type sans collecteur et à flux axial pourvue d'un arbre d'entrée (2) et d'un arbre de sortie (4), et des moyens (20) de commande et d'alimentation électrique à fréquence variable de ladite machine, la machine dynamoélectrique comportant un premier rotor (12) lié à l'arbre d'entrée, un second rotor (15) lié à l'arbre de sortie et un ensemble statorique (16), les deux rotors et l'ensemble statorique étant formés par des éléments discoïdes (A-J), l'ensemble statorique et au moins l'un des rotors ayant des éléments actifs respectifs pourvus d'enroulements raccordés aux moyens de commande et d'alimentation et agencés pour interagir avec l'autre rotor au moyen de flux magnétiques à travers des entrefers comprenant des entrefers axiaux entre des éléments discoïdes respectifs des rotors et de l'ensemble statorique, la transmission étant **caractérisée en ce qu'**elle comporte des moyens de déplacement (84-89; 110-113) pour déplacer axialement au moins un (81. 82) des éléments discoïdes pour modifier la largeur de l'entrefer axial (90, 91) entre cet élément et un élément discoïde adjacent (80).

2. Transmission selon la revendication 1, **caractérisée en ce que** les éléments discoïdes comprennent au moins un élément réactif.

3. Transmission selon la revendication 2, **caractérisée en ce que** ledit élément réactif est un élément de type synchrone à aimants permanents.

4. Transmission selon la revendication 2, **caractérisée en ce que** ledit élément réactif est un élément de type asynchrone.

5. Transmission selon la revendication 1, **caractérisée en ce que** le premier et/ou le second rotor et/ou l'ensemble statorique comportent au moins deux éléments discoïdes.

6. Transmission selon la revendication 1, **caractérisée en ce que** les moyens de déplacement comportent un mécanisme à vis axiale (86) entraînée en rotation par un moteur électrique (87).

7. Transmission selon la revendication 1, **caractérisée en ce que** les moyens de déplacement comportent un mécanisme à cames (110-113) entraîné par un moteur électrique (87).

8. Transmission selon l'une des revendications précédentes, **caractérisée en ce qu'**elle comporte des moyens d'accouplement (93-95; 99) pour lier mécaniquement en rotation un élément discoïde du premier rotor (12) à un élément discoïde du second rotor (15).

9. Transmission selon la revendication 8, **caractérisée en ce que** lesdits moyens d'accouplement comprennent lesdits moyens de déplacement (84-89; 110-113), la liaison entre les deux rotors étant réalisée par contact desdits éléments discoïdes respectifs (80-82) du premier et du second rotor.

10. Transmission selon la revendication 9, **caractérisée en ce que** lesdits moyens d'accouplement comportent des garnitures de friction (99) disposées sur des faces mutuellement opposées desdits éléments discoïdes respectifs (80-82) du premier et du second rotor.

## Patentansprüche

1. Kontinuierlich veränderliches elektromagnetisches Getriebe, das eine dynamoelektrische Maschine (3) des kollektorlosen Typs und mit axialem Fluss, die mit einer Antriebswelle (2) und mit einer Abtriebswelle (4) versehen ist, und Mittel (20) für die Steuerung und die elektrische Versorgung mit veränderlicher Frequenz der Maschine umfasst, wobei die dynamoelektrische Maschine einen mit der Antriebswelle verbundenen ersten Rotor (12), einen mit der Abtriebswelle verbundenen zweiten Rotor (15) und eine Statorbaugruppe (16) umfasst, wobei die zwei Rotoren und die Statorbaugruppe durch scheibenförmige Elemente (A-J) gebildet sind, wobei die Statorbaugruppe und wenigstens einer der Rotoren aktive Elemente besitzen, die jeweils mit Wicklungen versehen sind, die mit den Steuerungs- und Versorgungsmitteln verbunden und so beschaffen sind, dass sie mit dem anderen Rotor mittels des magnetischen Flusses über Luftspalte in Wechselwirkung stehen, wobei die Luftspalte axiale Luftspalte zwischen den jeweiligen scheibenförmigen Elementen der Rotoren und der Statorbaugruppe umfassen, wobei das Getriebe **dadurch gekennzeichnet ist, dass** es Verlagerungsmittel (84-89; 110-113) umfasst, um wenigstens eines (81, 82) der scheibenförmigen Elemente axial zu verlagern, um die Breite des axialen Luftspalts (90, 91) zwischen diesem Element und einem benachbarten scheibenförmigen Element (80) zu modifizieren.

2. Getriebe nach Anspruch 1, **dadurch gekennzeichnet, dass** die scheibenförmigen Elemente wenigstens ein reaktives Element umfassen.

3. Getriebe nach Anspruch 2, **dadurch gekennzeichnet, dass** das reaktive Element ein Element des synchronen Typs mit Permanentmagneten ist.

4. Getriebe nach Anspruch 2, **dadurch gekennzeichnet, dass** das reaktive Element ein Element des asynchronen Typs ist.

5. Getriebe nach Anspruch 1, **dadurch gekennzeichnet, dass** der erste und/oder der zweite Rotor und/oder die Statorbaugruppe wenigstens zwei scheibenförmige Elemente umfassen.

6. Getriebe nach Anspruch 1, **dadurch gekennzeichnet, dass** die Verlagerungsmittel einen Axialschraubenmechanismus (86) umfassen, der durch einen Elektromotor (87) rotatorisch angetrieben wird.

7. Getriebe nach Anspruch 1, **dadurch gekennzeichnet, dass** die Verlagerungsmittel einen Nockenmechanismus (110-113) umfassen, der durch einen Elektromotor (87) angetrieben wird.

8. Getriebe nach einem der vorhergehenden Ansprüche, **dadurch gekennzeichnet, dass** es Kopplungsmittel (93-95; 99) umfasst, um ein scheibenförmiges Element des ersten Rotors (12) mit einem scheibenförmigen Element des zweiten Rotors (15) rotatorisch mechanisch zu verbinden.

9. Getriebe nach Anspruch 8, **dadurch gekennzeichnet, dass** die Kopplungsmittel die Verlagerungsmittel (84-89; 110-113) umfassen, wobei die Verbindung zwischen den zwei Rotoren durch Kontakt der jeweiligen scheibenförmigen Elemente (80-82) des ersten und des zweiten Rotors verwirklicht ist.

10. Getriebe nach Anspruch 9, **dadurch gekennzeichnet, dass** die Kopplungsmittel Reibbeläge (99) aufweisen, die auf den einander zugewandten Flächen der jeweiligen scheibenförmigen Elemente (80-82) des ersten und des zweiten Rotors angeordnet sind.

## Claims

1. Continuously variable electromagnetic transmission, including a commutator-less, axial flux dynamoelectric machine (3) provided with an input shaft (2) and an output shaft (4), and means (20) for controlling and supplying electric power at a variable frequency to said machine, the dynamoelectric machine including a first rotor (12) connected to the input shaft, a second rotor (15) connected to the output shaft and a stator assembly (16), the two rotors and the stator assembly being formed by discoid elements (A - J), the stator assembly and at least one of the rotors having respective active elements provided with windings connected to the control and supply means and arranged to interact with the other rotor by means of magnetic flux through air gaps including axial air gaps between respective discoid elements of the rotors and the stator assembly, the transmission being **characterised in that** it includes displacement means (84-89; 110-113) for axially displacing at least one (81, 82) of the discoid elements to modify the width of the axial air gap (90, 91) between this element and an adjacent discoid element (80).

2. Transmission according to claim 1, **characterised in that** the discoid elements include at least one reactive element.

3. Transmission according to claim 2, **characterised in that** said reactive element is a synchronous permanent magnet type element.

4. Transmission according to claim 2, **characterised in that** said reactive element is an asynchronous type element.

5. Transmission according to claim 1, **characterised in that** the first and/ or second rotor and/or the stator assembly include at least two discoid elements.

6. Transmission according to claim 1, **characterised in that** the displacement means include an axial screw mechanism (86) driven in rotation by an electric motor (87).

7. Transmission according to claim 1, **characterised in that** the displacement means include a cam mechanism (110-113) driven by an electric motor (87).

8. Transmission according to any of the preceding claims, **characterised in that** it includes coupling means (93-95; 99) for mechanically connecting a discoid element of the first rotor (12) to a discoid element of the second rotor (15) in rotation.

9. Transmission according to claim 8, **characterised in that** said coupling means include said displacement means (84-89; 110-113), the connection between the two rotors being achieved via contact of said respective discoid elements (80-82) of the first and second rotor.

10. Transmission according to claim 9, **characterised in that** said coupling means include friction pads (99) arranged on mutually opposite faces of said respective discoid elements (80-82) of the first and second rotor.
